(19) 

**Europäisches Patentamt**
**European Patent Office**
**Office européen des brevets**

(11) **EP 4 567 072 A1**

(12) **EUROPEAN PATENT APPLICATION**
published in accordance with Art. 153(4) EPC

(43) Date of publication:
**11.06.2025 Bulletin 2025/24**

(21) Application number: **23850025.0**

(22) Date of filing: **28.07.2023**

(51) International Patent Classification (IPC):
**C08L 77/06** (2006.01)     **C08K 5/09** (2006.01)
**C08L 23/00** (2006.01)

(52) Cooperative Patent Classification (CPC):
**C08K 5/09; C08L 23/00; C08L 77/06**

(86) International application number:
**PCT/JP2023/027822**

(87) International publication number:
**WO 2024/029470 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.08.2022 JP 2022125839**

(71) Applicant: **Kuraray Co., Ltd.**
**Kurashiki-shi, Okayama 710-0801 (JP)**

(72) Inventor: **WATANABE, Risa**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **POLYAMIDE RESIN COMPOSITION, EXTRUSION-MOLDED BODY, AND PRODUCTION METHOD FOR EXTRUSION-MOLDED BODY**

(57) Provided is a polyamide resin composition which has excellent residence stability, prevents an increase in pressure during extrusion molding, and provides an extrusion-molded body having excellent surface properties, flexibility, chemical resistance, and impact resistance in a wide temperature range. The polyamide resin composition contains a semi-aromatic polyamide (A), a polyolefin (B), and a fatty acid metal salt (C), and satisfies requirements [1] to [5]: [1] a mass MA of the component (A) and a mass MB of the component (B) in the composition satisfy MA/MB = 60/40 to 85/15; [2] an amount of the component (C) in the composition is 0.05 to 0.5% by mass with respect to the total mass of the components (A) and (B); [3] a terminal amino group concentration [NH$_2$] of the component (A) is 45 to 80 $\mu$eq/g, and the [NH$_2$] and a terminal carboxy group concentration [COOH] ($\mu$eq/g) of the component (A) satisfy 2 < [NH$_2$]/[COOH] < 5; [4] a content ratio of a functional group containing an unsaturated epoxide in the component (B) $\leq$ 200 mol/g; and [5] a ratio of copper atoms derived from a copper-based stabilizer in the composition $\leq$ 200 ppm by mass.

EP 4 567 072 A1

**Description**

Technical Field

The present invention relates to a polyamide resin composition, an extrusion-molded body, and a method for producing an extrusion-molded body.

Background Art

A polyamide has excellent strength, heat resistance, chemical resistance, and the like, and has traditionally been used for an automobile fuel pipe, an oil or gas transport pipe, and the like.

A technique for imparting flexibility or impact resistance to a polyamide by blending a specific polyolefin containing a functional group that reacts with a polyamide has been known for a long time.

For example, PTL 1 discloses a polyamide resin composition containing a polyolefin and a semi-aromatic polyamide, in which a predetermined proportion or more of the terminal groups in the molecular chain of a specific semi-aromatic polyamide are terminally blocked, and the amount of the remaining terminal amino groups is set within a specific range, and further a value obtained by dividing the amount of terminal amino groups by the amount of terminal carboxy groups is set to a specified value or more.

Further, PTL 2 discloses a flexible polyamide resin composition, which is formed of a specific semi-aromatic polyamide, an olefinic copolymer, and a stabilizer containing copper, and to which calcium stearate is added as a processing aid.

Citation List

Patent Literature

PTL 1: JP 2013-40346 A
PTL 2: JP 2016-172445 A

Summary of Invention

Technical Problem

When it is assumed that a molded body is produced by extrusion molding, a polyamide resin composition is required to have production stability, residence stability, and low resin pressure during extrusion molding in addition to flexibility, impact resistance, and chemical resistance of the molded body. It is also required to have impact resistance in a low temperature range so that it can withstand use in various environments.

In extrusion molding, the residence time in a molten state in a molding machine is longer than in injection molding. Therefore, as in the case of a polyamide resin composition described in PTLs 1 and 2, a polyamide resin composition in which the addition amount of an elastomer is increased for the purpose of imparting flexibility, or as in the case of a polyamide resin composition described in PTL 1, a polyamide resin composition in which the terminal amino group concentration is increased for the purpose of improving chemical resistance may lead to an increase in melt viscosity during residence or a decrease in residence stability. These problems are more likely to occur in a polyamide resin composition obtained using a semi-aromatic polyamide with a high melting point.

Therefore, an object of the present invention is to provide a polyamide resin composition which has excellent residence stability, can prevent an increase in pressure during extrusion molding, and provides an extrusion-molded body having excellent surface properties, and also having excellent flexibility, chemical resistance, and impact resistance in a wide temperature range.

Solution to Problem

The present inventors found that the above object can be achieved by a polyamide resin composition, which contains a semi-aromatic polyamide (A), a polyolefin (B), and a fatty acid metal salt (C) and satisfies specific requirements, and thus completed the present invention.

The present invention relates to the following <1> to <12>.

    <1> A polyamide resin composition, which contains a semi-aromatic polyamide (A), a polyolefin (B), and a fatty acid metal salt (C), and satisfies requirements [1] to [5] below:

[1] a ratio of a mass MA of the semi-aromatic polyamide (A) and a mass MB of the polyolefin (B) in the polyamide resin composition is as follows: MA/MB = 60/40 to 85/15;

[2] a content of the fatty acid metal salt (C) in the polyamide resin composition is 0.05 to 0.5% by mass with respect to the total mass of the semi-aromatic polyamide (A) and the polyolefin (B);

[3] a terminal amino group concentration [NH$_2$] ($\mu$eq/g) of the semi-aromatic polyamide (A) is 45 to 80 $\mu$eq/g, and a ratio of the terminal amino group concentration and a terminal carboxy group concentration [COOH] ($\mu$eq/g) of the semi-aromatic polyamide (A) satisfies formula (1) below:

$$2 < [NH_2]/[COOH] < 5 \qquad \text{Formula (1)};$$

[4] the polyolefin (B) does not contain a functional group containing an unsaturated epoxide, or a content ratio of a functional group containing an unsaturated epoxide in the polyolefin (B) is 200 $\mu$mol/g or less; and

[5] the polyamide resin composition does not contain a copper-based stabilizer, or a ratio of copper atoms derived from a copper-based stabilizer in the polyamide resin composition is 200 ppm by mass or less.

<2> The polyamide resin composition according to the above <1>, in which the semi-aromatic polyamide (A) contains 50 mol% or more of at least one type selected from a group consisting of a terephthalic acid unit and a naphthalene dicarboxylic acid unit with respect to all dicarboxylic acid units.

<3> The polyamide resin composition according to the above <1> or <2>, in which the semi-aromatic polyamide (A) contains 60 mol% or more of an aliphatic diamine unit having 7 to 13 carbon atoms or a metaxylylene diamine unit with respect to all diamine units.

<4> The polyamide resin composition according to the above <3>, in which the aliphatic diamine unit having 7 to 13 carbon atoms is a unit derived from at least one type of aliphatic diamine selected from a group consisting of 1,7-heptanediamine, 1,8-octanediamine, 1,9-nonanediamine, 2-methyl-1,8-octanediamine, and 1,10-decanediamine.

<5> The polyamide resin composition according to the above <3> or <4>, in which the aliphatic diamine unit having 7 to 13 carbon atoms is a unit derived from at least one type of aliphatic diamine selected from a group consisting of 1,9-nonanediamine and 2-methyl-1,8-octanediamine.

<6> The polyamide resin composition according to any one of the above <1> to <5>, in which the polyolefin (B) is a modified polyolefin obtained by modification with at least one type selected from a group consisting of an $\alpha,\beta$-unsaturated carboxylic acid and a derivative thereof.

<7> The polyamide resin composition according to any one of the above <1> to <6>, in which the fatty acid metal salt (C) is a metal salt of a fatty acid having 10 to 28 carbon atoms.

<8> The polyamide resin composition according to any one of the above <1> to <7>, in which the fatty acid metal salt (C) is selected from a group consisting of calcium stearate, magnesium stearate, and zinc stearate.

<9> The polyamide resin composition according to any one of the above <1> to <8>, which contains an antioxidant.

<10> An extrusion-molded body of the polyamide resin composition according to any one of the above <1> to <9>.

<11> The extrusion-molded body according to the above <10>, which is a chemical pipe, a composite pipe, a rodless oil recovery pipe, an onshore oil transport pipe, an offshore oil transport pipe, a geothermal fluid pipe, an umbilical tube, or a flexible pipe.

<12> A method for producing an extrusion-molded body, in which an extrusion-molded body is obtained by heating and melting the polyamide resin composition according to any one of the above <1> to <9>, and extrusion molding the melted polyamide resin composition.

Advantageous Effects of Invention

According to the present invention, it is possible to provide a polyamide resin composition which has excellent residence stability, can prevent an increase in pressure during extrusion molding, and provides an extrusion-molded body having excellent surface properties, and also having excellent flexibility, chemical resistance, and impact resistance in a wide temperature range.

Description of Embodiments

Hereinafter, embodiments of the present invention will be described.

The present invention also includes embodiments in which matters described herein are arbitrarily selected or embodiments in which matters described herein are arbitrarily combined.

In the present description, rules considered to be preferred can be arbitrarily selected, and a combination of rules considered to be preferred can be said to be more preferred.

In the present description, the description of "XX to YY" means "XX or more and YY or less".

In the present description, regarding preferred numerical ranges (for example, ranges of contents or the like), the lower limit values and the upper limit values described in stages can be independently combined. For example, from the description of "preferably 10 to 90, more preferably 30 to 60", it is also possible to set the numerical range to "10 to 60" by combining the "preferred lower limit value (10)" and the "more preferred upper limit value (60)".

[Polyamide Resin Composition]

A polyamide resin composition according to an embodiment of the present invention contains a semi-aromatic polyamide (A), a polyolefin (B), and a fatty acid metal salt (C), and satisfies requirements [1] to [5] below:

[1] a ratio of a mass MA of the semi-aromatic polyamide (A) and a mass MB of the polyolefin (B) in the polyamide resin composition is as follows: MA/MB = 60/40 to 85/15;
[2] a content of the fatty acid metal salt (C) in the polyamide resin composition is 0.05 to 0.5% by mass with respect to the total mass of the semi-aromatic polyamide (A) and the polyolefin (B);
[3] a terminal amino group concentration $[NH_2]$ ($\mu$eq/g) of the semi-aromatic polyamide (A) is 45 to 80 $\mu$eq/g, and a ratio of the terminal amino group concentration and a terminal carboxy group concentration $[COOH]$ ($\mu$eq/g) of the semi-aromatic polyamide (A) satisfies formula (1) below:

$$2 < [NH_2]/[COOH] < 5 \qquad \text{Formula (1)};$$

[4] the polyolefin (B) does not contain a functional group containing an unsaturated epoxide, or a content ratio of a functional group containing an unsaturated epoxide in the polyolefin (B) is 200 mol/g or less; and
[5] the polyamide resin composition does not contain a copper-based stabilizer, or a ratio of copper atoms derived from a copper-based stabilizer in the polyamide resin composition is 200 ppm by mass or less.

As specified in the above-mentioned requirement [1], when the ratio of the mass MA of the semi-aromatic polyamide (A) and the mass MB of the polyolefin (B) in the polyamide resin composition is as follows: MA/MB = 60/40 to 85/15, the polyolefin (B) exists as a phase dispersed in the matrix of the semi-aromatic polyamide (A), and good flexibility can be exhibited.

Further, as specified in the above-mentioned requirement [2], when the content of the fatty acid metal salt (C) in the polyamide resin composition is 0.05 to 0.5% by mass with respect to the total mass of the semi-aromatic polyamide (A) and the polyolefin (B), it becomes easier to obtain an extrusion-molded body having excellent production stability, excellent extrusion moldability, and excellent surface properties.

Further, as specified in the above-mentioned requirement [3], when the terminal amino group concentration $[NH_2]$ ($\mu$eq/g) of the semi-aromatic polyamide (A) is 45 to 80 $\mu$eq/g, and the ratio of the terminal amino group concentration and the terminal carboxy group concentration $[COOH]$ ($\mu$eq/g) of the semi-aromatic polyamide (A) satisfies the above formula (1), good chemical resistance and residence stability can be ensured.

Further, as specified in the above-mentioned requirement [4], when the polyolefin (B) does not contain a functional group containing an unsaturated epoxide, or the content ratio of a functional group containing an unsaturated epoxide in the polyolefin (B) is 200 mol/g or less, the effect of the fatty acid metal salt (C) is maximized and good molding processability can be obtained.

Further, as specified in the above-mentioned requirement [5], when the polyamide resin composition does not contain a copper-based stabilizer, or a content of a copper-based stabilizer in the polyamide resin composition is 200 ppm by mass or less, the residence stability during extrusion molding and the surface properties of the resulting extrusion-molded body can be improved.

When it is assumed that a molded body is produced by extrusion molding, a polyamide resin composition is required to have production stability, residence stability, and low resin pressure during extrusion molding in addition to flexibility, impact resistance, and chemical resistance of the molded body.

As described above, PTL 1 proposes a polyamide resin composition in which a modified polyolefin is blended into a specific semi-aromatic polyamide, and also the value of $[NH_2]/[COOH]$ of the semi-aromatic polyamide is focused on and $[NH_2]/[COOH]$ is set to 6 or more.

However, if the amount of $[NH_2]$ present becomes excessively large, it will be disadvantageous for long-term residence stability, and it will be difficult to improve the ease of production in extrusion molding. For this reason, it is conceivable that the value of $[NH_2]/[COOH]$ of the semi-aromatic polyamide is set to less than 6.

However, according to the study by the present inventor, it was found that when the $[NH_2]$ is reduced to reduce the value of $[NH_2]/[COOH]$ so as to achieve long-term residence stability, any of the other properties described above (that is, production stability, low resin pressure during extrusion molding, flexibility, impact resistance, and chemical resistance of a molded body) is likely to deteriorate. Then, it was found that when the $[NH_2]$ is reduced, long-term residence stability and all of the above-mentioned respective properties can be ensured by satisfying predetermined requirements, and thus the present invention was accomplished.

More specifically, the present inventor found that when the [NH$_2$] is relatively small, the increase in resin pressure during extrusion molding is prevented by incorporating a large amount of a polyolefin and also incorporating a predetermined amount of a fatty acid metal salt to reduce the resin pressure, and further, in this case, it is effective in ensuring the above-mentioned properties by sufficiently reducing the content of a copper-based stabilizer, and thus accomplished the present invention.

The reason why the use of a predetermined amount of a fatty acid metal salt prevents the increase in resin pressure during extrusion molding is considered to be, but not limited to, that the penetration of the fatty acid metal salt into the semi-aromatic polyamide, which is the main constituent component, reduces the adhesion of the polyamide chains, and enhances the slipperiness between the polyamide resin composition and the molding machine, resulting in preventing the increase in resin pressure during extrusion molding.

When the polyamide resin composition satisfies all of the above-mentioned requirements [1] to [5], the polyamide resin composition can be made as follows: it has excellent residence stability, can prevent the increase in pressure during extrusion molding, and provides an extrusion-molded body having excellent surface properties, and also having excellent flexibility, chemical resistance, and impact resistance in a wide temperature range.

Hereinafter, the respective components that form the polyamide resin composition will be described.

<Semi-Aromatic Polyamide (A)>

The polyamide resin composition contains at least one type of semi-aromatic polyamide (A).

The semi-aromatic polyamide (A) contains at least one type of repeating unit formed by polycondensation of a dicarboxylic acid unit and a diamine unit.

Examples of the dicarboxylic acid unit include aromatic dicarboxylic acid units such as a terephthalic acid unit, a naphthalene dicarboxylic acid unit, an isophthalic acid unit, a 1,4-phenylenedioxydiacetic acid unit, a 1,3-phenylenedioxydiacetic acid unit, a diphenic acid unit, a diphenylmethane-4,4'-dicarboxylic acid unit, a diphenylsulfone-4,4'-dicarboxylic acid unit, and a 4,4'-biphenyldicarboxylic acid unit.

Examples of the naphthalene dicarboxylic acid unit include units derived from 2,6-naphthalene dicarboxylic acid, 2,7-naphthalene dicarboxylic acid, and 1,4-naphthalene dicarboxylic acid, and a 2,6-naphthalene dicarboxylic acid unit is preferred.

Examples of the dicarboxylic acid unit include units derived from aliphatic dicarboxylic acids such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, trimethyladipic acid, and a dimer acid; alicyclic dicarboxylic acids such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and the like.

As the unit derived from such a dicarboxylic acid, only one type may be contained or two or more types may be contained in the dicarboxylic acid unit.

The semi-aromatic polyamide (A) preferably contains 50 mol% or more of at least one type selected from the group consisting of a terephthalic acid unit and a naphthalene dicarboxylic acid unit with respect to all dicarboxylic acid units. In addition, from the viewpoint of easily obtaining good chemical resistance and heat resistance, the semi-aromatic polyamide (A) more preferably contains 75 mol% or more, and still more preferably 90 mol% or more of at least one type selected from the group consisting of a terephthalic acid unit and a naphthalene dicarboxylic acid unit with respect to all dicarboxylic acid units.

Examples of the diamine unit include units derived from linear aliphatic diamines such as 1,7-heptanediamine, 1,8-octanediamine, 1,9-nonanediamine, 1,10-decanediamine, 1,11-undecanediamine, 1,12-dodecanediamine, and 1,13-tridecanediamine; branched aliphatic diamines such as 2-methyl-1,3-propanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine, 2-ethyl-1,7-heptanediamine, and 5-methyl-1,9-nonanediamine; alicyclic diamines such as cyclohexanediamine, methylcyclohexanediamine, and isophoronediamine; aromatic diamines such as p-phenylenediamine, m-phenylenediamine, xylylenediamine, 4,4'-diaminodiphenylmethane, 4,4'-diaminodiphenyl sulfone, and 4,4'-diaminodiphenyl ether; and the like, and one type or two or more types of these can be contained.

The semi-aromatic polyamide (A) preferably contains 60 mol% or more of an aliphatic diamine unit having 7 to 13 carbon atoms or a metaxylylene diamine unit with respect to all diamine units. When the semi-aromatic polyamide (A) containing an aliphatic diamine unit having 7 to 13 carbon atoms in the above proportion is used, a polyamide resin composition having excellent toughness, heat resistance, chemical resistance, and light weight is obtained. The semi-aromatic polyamide (A) more preferably contains 75 mol% or more, still more preferably 90 mol% or more of at least one type selected from aliphatic diamine units having 7 to 13 carbon atoms with respect to all diamine units.

The aliphatic diamine unit having 7 to 13 carbon atoms is preferably a unit derived from at least one type of aliphatic diamine selected from the group consisting of 1,7-heptanediamine, 1,8-octanediamine, 1,9-nonanediamine, 2-methyl-1,8-octanediamine, and 1,10-decanediamine, and is more preferably a unit derived from at least one type of aliphatic diamine selected from the group consisting of 1,9-nonanediamine and 2-methyl-1,8-octanediamine because a polyamide resin composition with more excellent heat resistance, low water absorption, and chemical resistance is obtained.

When the aliphatic diamine unit includes both units derived from 1,9-nonanediamine and 2-methyl-1,8-octanediamine, the molar ratio of the 1,9-nonanediamine unit and the 2-methyl-1,8-octanediamine unit: 1,9-nonanediamine unit/2-methyl-1,8-octanediamine unit is preferably in the range of 95/5 to 40/60, more preferably in the range of 90/10 to 40/60, and still more preferably in the range of 80/20 to 40/60.

The semi-aromatic polyamide (A) preferably contains a dicarboxylic acid unit containing an aromatic dicarboxylic acid unit as a main component and a diamine unit containing an aliphatic diamine unit having 7 to 13 carbon atoms as a main component. Here, "containing as a main component" means that the component is contained in an amount of 50 to 100 mol%, preferably 60 to 100 mol% of the total units.

Examples of the semi-aromatic polyamide (A) include polynonamethylene terephthalamide (polyamide 9T), poly(2-methyloctamethylene)terephthalamide (nylon M8T), a polynonamethylene terephthalamide/poly(2-methyloctamethylene)terephthalamide copolymer (nylon 9T/M8T), polynonamethylene naphthalene dicarboxamide (polyamide 9N), a polynonamethylene naphthalene dicarboxamide/poly(2-methyloctamethylene)naphthalene dicarboxamide copolymer (nylon 9N/M8N), polydecamethylene terephthalamide (polyamide 10T), and a copolymer of polyamide 10T and polyundecaneamide (polyamide 11) (polyamide 10T/11).

Among these, at least one type selected from polyamide 10T/11, polynonamethylene naphthalene dicarboxamide (polyamide 9N), a polynonamethylene naphthalene dicarboxamide/poly(2-methyloctamethylene)naphthalene dicarboxamide copolymer (nylon 9N/M8N), polynonamethylene terephthalamide (polyamide 9T), a polynonamethylene terephthalamide/poly(2-methyloctamethylene)terephthalamide copolymer (nylon 9T/M8T), and polydecamethylene terephthalamide (polyamide 10T) is preferred, and at least one type selected from a polynonamethylene naphthalene dicarboxamide/poly(2-methyloctamethylene) naphthalene dicarboxamide copolymer (nylon 9N/M8N), a polynonamethylene terephthalamide/poly(2-methyloctamethylene)terephthalamide copolymer (nylon 9T/M8T), and polyamide 10T/11 is more preferred, and from the viewpoint of ensuring molding processability and rigidity at a high temperature, a polynonamethylene terephthalamide/poly(2-methyloctamethylene)terephthalamide copolymer (nylon 9T/M8T) is still more preferred.

Further, as the semi-aromatic polyamide (A), a semi-aromatic polyamide that contains a dicarboxylic acid unit containing an aliphatic dicarboxylic acid unit as a main component and a diamine unit containing an aromatic diamine unit as a main component can also be used. Examples of the aliphatic dicarboxylic acid unit include units derived from the above-mentioned aliphatic dicarboxylic acids, and one type or two or more types of these can be contained. Examples of the aromatic diamine unit include units derived from the above-mentioned aromatic diamines, and one type or two or more types of these can be contained. In addition, another unit may be contained within a range that does not impede the effects of the present invention.

Examples of the semi-aromatic polyamide that contains a dicarboxylic acid unit containing an aliphatic dicarboxylic acid unit as a main component and a diamine unit containing an aromatic diamine unit as a main component include polymethaxylylene adipamide (MXD6) and polyparaxylylene sebacamide (PXD10).

It is preferred that 10 mol% or more of the terminal groups in the molecular chain of the semi-aromatic polyamide (A) are blocked with a terminal blocking agent. When the semi-aromatic polyamide (A) having a terminal blocking rate of 10 mol % or more is used, a polyamide resin composition having more excellent physical properties such as melt stability and hot water resistance is obtained.

As the terminal blocking agent, a monofunctional compound having reactivity with a terminal amino group or a terminal carboxy group can be used. Specific examples thereof include a monocarboxylic acid, an acid anhydride, a monoisocyanate, a monoacid halide, a monoester, a monoalcohol, and a monoamine. From the viewpoint of reactivity, stability of the blocked terminal, and the like, a monocarboxylic acid is preferred as the terminal blocking agent for the terminal amino group, and a monoamine is preferred as the terminal blocking agent for the terminal carboxy group. From the viewpoint of ease of handling and the like, a monocarboxylic acid is more preferred as the terminal blocking agent.

The monocarboxylic acid used as the terminal blocking agent is not particularly limited as long as it has reactivity with an amino group. Examples of the monocarboxylic acid include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid; and arbitrary mixtures thereof. Among these, at least one type selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred from the viewpoint of reactivity, stability of the blocked terminal, price, and the like.

The monoamine used as the terminal blocking agent is not particularly limited as long as it has reactivity with a carboxy group. Examples of the monoamine include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, at least one type selected from the group consisting of butylamine, hexylamine, octylamine, decylamine, stearylamine, cyclohexylamine, and aniline is preferred from the viewpoint of reactivity, a high boiling point, stability of the blocked terminal, price, and the like.

The semi-aromatic polyamide (A) preferably has an inherent viscosity $\eta_{inh}$ of 0.6 dL/g or more, more preferably 0.8 dL/g or more, still more preferably 0.9 dL/g or more, and particularly preferably 1.0 dL/g or more as measured at a temperature of 30°C using concentrated sulfuric acid as a solvent at a concentration of 0.2 g/dL. Further, the inherent viscosity is preferably 2.0 dL/g or less, more preferably 1.8 dL/g or less, and still more preferably 1.6 dL/g or less. When the inherent viscosity $\eta_{inh}$ of the semi-aromatic polyamide (A) is within the above range, various physical properties such as moldability are further improved.

The inherent viscosity $\eta_{inh}$ can be determined from the flow-down time $t_0$ (sec) of the solvent (concentrated sulfuric acid), the flow-down time $t_1$ (sec) of the sample solution, and the sample concentration c (g/dL) in the sample solution (that is, 0.2 g/dL) using the following formula (P).

$$\eta_{inh} = [\ln(t_1/t_0)]/c \qquad \text{Formula (P)}$$

As specified in the above-mentioned requirement [3], the semi-aromatic polyamide (A) has a content of terminal amino groups (hereinafter also referred to as "a terminal amino group content") ([NH$_2$]) of 45 to 80 $\mu$eq/g, preferably 45 to 75 $\mu$eq/g, more preferably 45 to 70 $\mu$eq/g, and still more preferably 45 to 65 $\mu$eq/g.

When the terminal amino group content ([NH$_2$]) is 45 $\mu$eq/g or more, the polyamide resin composition has good chemical resistance. In addition, when the terminal amino group content is 80 $\mu$eq/g or less, in a case where a modified polyolefin, which will be described later, is used as the polyolefin (B), it is possible to prevent gelation from proceeding due to an overreaction of the terminal amino group with the modified portion of the polyolefin (B).

The terminal amino group content ([NH$_2$]) as used herein refers to the amount (unit: $\mu$eq) of terminal amino groups contained in 1 g of the semi-aromatic polyamide (A), and can be determined by a neutralization titration method using an indicator. The [NH$_2$] is specifically measured by the procedure described in the Examples.

As specified in the above-mentioned requirement [3], the semi-aromatic polyamide (A) has a ratio [NH$_2$]/[COOH] of the terminal amino group content [NH$_2$] to the terminal carboxy group [COOH] of more than 2 and less than 5. When the [NH$_2$]/[COOH] is more than 2, chemical resistance can be sufficiently ensured, and when the [NH$_2$]/[COOH] is less than 5, residence stability can be sufficiently ensured.

The terminal carboxy group content ([COOH], unit: $\mu$eq/g) of the semi-aromatic polyamide can be measured by potentiometric titration using a reagent, and is specifically measured by the procedure described in the Examples.

The semi-aromatic polyamide (A) containing a dicarboxylic acid unit and a diamine unit and having a terminal amino group content ([NH$_2$]) and a terminal carboxy group content ([COOH]) within the above ranges can be produced, for example, as follows.

First, a dicarboxylic acid, a diamine, and, if necessary, an aminocarboxylic acid, a lactam, a catalyst, and a terminal blocking agent are mixed to produce a nylon salt. At this time, it is preferred to set the number of moles of all carboxy groups (X) and the number of moles of all amino groups (Y) contained in the above reaction raw materials so as to satisfy the following formula (Q) for calculating the excess, because it becomes easier to produce the semi-aromatic polyamide (A) having a terminal amino group content ([NH$_2$]) and a terminal carboxy group content ([COOH]) of 10 to 70 $\mu$eq/g.

$$-0.5 \leq [(Y\text{-}X)/Y] \times 100 \leq 2.0 \qquad \text{Formula (Q)}$$

Subsequently, the produced nylon salt is heated to a temperature of 200 to 250°C to form a prepolymer with an inherent viscosity $\eta_{inh}$ of 0.10 to 0.60 dlL/g at 30°C in concentrated sulfuric acid, and the degree of polymerization is further increased, whereby the semi-aromatic polyamide (A) can be obtained. When the inherent viscosity $\eta_{inh}$ of the prepolymer is within the range of 0.10 to 0.60 dLl/g, there is little deviation in the molar balance between the carboxy group and the amino group and there is little decrease in the polymerization rate at the stage of increasing the degree of polymerization, and the semi-aromatic polyamide (A) with a small molecular weight distribution and more excellent various performances and moldability is obtained.

When the stage of increasing the degree of polymerization is performed by a solid phase polymerization method, it is preferably performed under reduced pressure or under an inert gas flow, and when the polymerization temperature is within the range of 200 to 280°C, the polymerization rate is high, the productivity is high, and coloration and gelation can be effectively prevented. In addition, when the stage of increasing the degree of polymerization is performed using a melt extruder, the polymerization temperature is preferably 370°C or lower. When the polymerization is performed under such conditions, there is little decomposition of the semi-aromatic polyamide (A), and the semi-aromatic polyamide (A) with little deterioration is obtained.

The melting point of the semi-aromatic polyamide (A) is not particularly limited, but can be set to, for example, 240°C or higher, 250°C or higher, or 260°C or higher from the viewpoint of ensuring good heat resistance. The upper limit of the melting point of the semi-aromatic polyamide (A) is not particularly limited, but is preferably 310°C or lower, more preferably 300°C or lower, and still more preferably 280°C or lower also in consideration of moldability or the like.

The melting point of the semi-aromatic polyamide (A) can be measured in accordance with ISO 11357-3 (2nd edition, 2011), and is specifically measured by the procedure described in the Examples.

(Content of Semi-Aromatic Polyamide (A))

The content of the semi-aromatic polyamide (A) contained in the polyamide resin composition of the present embodiment is preferably 60 to 85% by mass, and preferably 70 to 85% by mass with respect to 100% by mass of the polyamide resin composition. When the content of the semi-aromatic polyamide (A) is within the above range, it is possible to obtain a composition that has more excellent chemical resistance and heat resistance, and has more excellent processing stability and flexibility during melt-kneading, and impact resistance.

Examples of the catalyst that can be used when the semi-aromatic polyamide (A) is produced include phosphoric acid, phosphorous acid, hypophosphorous acid, and a salt or an ester thereof. Examples of the salt or ester include a salt of phosphoric acid, phosphorous acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorous acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorous acid, or hypophosphorous acid.

The amount of the catalyst used is preferably 0.01% by mass or more, and more preferably 0.05% by mass or more, and is preferably 1.0% by mass or less, and more preferably 0.5% by mass or less with respect to 100% by mass of the total mass of the raw materials. When the amount of the catalyst used is equal to or more than the above-mentioned lower limit, it becomes easier for the polymerization to proceed well. When the amount of the catalyst used is equal to or less than the above-mentioned upper limit, impurities derived from the catalyst are less likely to be generated, and for example, when the polyamide resin composition is extrusion-molded, it becomes easier to prevent defects due to the impurities.

<Polyolefin (B)>

The polyamide resin composition of the present embodiment contains a semi-aromatic polyamide (A) and a polyolefin (B), and the polyolefin (B) exists as a phase dispersed in the matrix of the semi-aromatic polyamide (A). The polyolefin (B) is preferably a modified polyolefin obtained by modification with at least one type selected from the group consisting of an $\alpha,\beta$-unsaturated carboxylic acid and a derivative thereof.

Examples of the (unmodified) resin used as a base in the polyolefin (B) include a lowdensity polyethylene, a medium-density polyethylene, a high-density polyethylene, polypropylene, an ethylene-propylene copolymer, an ethylene-butene copolymer, an ethylene-propylene-diene copolymer, an ethylene-vinyl acetate copolymer, a saponified ethylene-vinyl acetate copolymer, an ethylene-acrylic acid copolymer, an ethylene-methacrylic acid copolymer, an ethylene-methyl acrylate copolymer, an ethylene-methyl methacrylate copolymer, an ethylene-ethyl acrylate copolymer, and polybutadiene.

Examples of the $\alpha,\beta$-unsaturated carboxylic acid and the derivative thereof include $\alpha,\beta$-unsaturated carboxylic acids such as acrylic acid, methacrylic acid, maleic acid, fumaric acid, and itaconic acid. Further, examples of an unsaturated compound having an acid anhydride group include dicarboxylic anhydrides having an $\alpha,\beta$-unsaturated bond such as maleic anhydride and itaconic anhydride. The unsaturated compound having a carboxy group and/or an acid anhydride group is preferably a dicarboxylic anhydride having an $\alpha,\beta$-unsaturated bond, and more preferably maleic anhydride.

The content of the carboxy group and the acid anhydride group in the polyolefin (B) is preferably in the range of 25 to 200 $\mu$mol/g, more preferably in the range of 50 to 100 $\mu$mol/g. When the content of the above-mentioned functional group is 25 $\mu$mol/g or more, the effect of improving the impact resistance is sufficient, while when the content is 200 $\mu$mol/g or less, the fluidity of the resulting polyamide resin composition is less likely to decrease, and deterioration in moldability is prevented.

The polyolefin (B) contained in the polyamide resin composition of the present embodiment does not contain a functional group containing an unsaturated epoxide, or the content ratio of a functional group containing an unsaturated epoxide in the polyolefin (B) is 200 $\mu$mol/g or less as specified in the above-mentioned requirement [4]. When the polyolefin (B) does not contain a functional group containing an unsaturated epoxide, or the content ratio of a functional group containing an unsaturated epoxide in the polyolefin (B) is within the above range, the effect of the fatty acid metal salt (C) is maximized and good molding processability can be obtained.

The above-mentioned content ratio is preferably 100 $\mu$mol/g or less, more preferably 50 $\mu$mol/g or less, still more preferably 20 $\mu$mol/g or less, and particularly preferably 0 $\mu$mol/g (that is, the polyolefin (B) does not contain a functional group containing an unsaturated epoxide) from the viewpoint of further enhancing the molding processability.

In addition, in the present description, the content ratio EPO of a functional group containing an unsaturated epoxide in the polyolefin (B) is calculated according to the following formula (R).

$$EPO = 100 \times N \times W/M \qquad \text{Formula (R)}$$

In the formula (R), M, W, and N are each as follows.

· M: the molecular weight of the unsaturated epoxide
· W: the mass ratio (% by mass) of the unsaturated epoxide contained in the polyolefin (B)
· N: the mass ratio (% by mass) of the polyolefin (B) per unit mass of the polyamide resin composition

Note that the above W can be measured by a method common in the technical field, such as a nuclear magnetic resonance apparatus (NMR).

Examples of the functional group containing an unsaturated epoxide include aliphatic glycidyl ethers and esters such as allyl glycidyl ether, vinyl glycidyl ether, glycidyl maleate, and itaconate, and glycidyl acrylate and methacrylate; and alicyclic glycidyl ethers and esters such as 2-cyclohexen-1-yl glycidyl ether, diglycidyl cyclohexene-4,5-dicarboxylate, glycidylcyclohexene-4-carboxylate, glycidyl 5-norbornene-2-methyl-2-carboxylate, and diglycidyl endo-cis-bicyclo[2.2.1] hept-5-ene-2,3-dicarboxylate.

(Content of Polyolefin (B))

The content of the polyolefin (B) contained in the polyamide resin composition of the present embodiment is preferably 15 to 40% by mass, and more preferably 15 to 30% by mass with respect to 100% by mass of the polyamide resin composition. When the content of the polyolefin (B) is within the above range, it becomes easier to obtain a polyamide resin composition having excellent processing stability and flexibility during melt-kneading, and impact resistance.

(Ratio of Semi-Aromatic Polyamide (A) to Polyolefin (B))

The ratio between the mass MA of the semi-aromatic polyamide (A) and the mass MB of the polyolefin (B) in the polyamide resin composition of the present embodiment is as follows: MA/MB = 60/40 to 85/15 as specified in the above-mentioned requirement [1]. When MA/MB is in this numerical range, the polyolefin (B) exists as a phase dispersed in the matrix of the semi-aromatic polyamide (A), and good flexibility can be exhibited.

From the viewpoint of making it easier to disperse the polyolefin (B), MA/MB is preferably 63/37 to 84/16, more preferably 68/32 to 83/17, and still more preferably 68/32 to 82/18.

From the viewpoint of making it easier to enhance the extrusion moldability, MA/MB can also be set to, for example, 73/27 to 85/15, 75/25 to 85/15, or 77/23 to 85/15.

From the viewpoint of making it easier to enhance the elongation properties of a molded body obtained by extrusion molding, MA/MB can also be set to, for example, 60/40 to 78/22, 60/40 to 76/14, or 60/40 to 75/25.

<Fatty Acid Metal Salt (C)>

The polyamide resin composition of the present embodiment contains a fatty acid metal salt (C). The incorporation of the fatty acid metal salt (C) can prevent the increase in pressure during extrusion molding, and can provide an extrusion-molded body having excellent surface properties.

The content of the fatty acid metal salt (C) in the polyamide resin composition is 0.05 to 0.5% by mass with respect to the total mass of the semi-aromatic polyamide (A) and the polyolefin (B) as specified in the above-mentioned requirement [2]. When the content of the fatty acid metal salt (C) is within the above range, it becomes easier to obtain an extrusion-molded body having excellent production stability, excellent extrusion moldability, and excellent surface properties.

The content of the fatty acid metal salt (C) in the polyamide resin composition is preferably 0.07 to 0.5% by mass, and more preferably 0.08 to 0.5% by mass from the viewpoint of making it easier to enhance the processability and extrusion moldability.

From the viewpoint of making it easier to ensure the elongation properties of the obtained molded body while preventing the increase in resin pressure during extrusion molding, it is also possible to set the content of the fatty acid metal salt (C) in the polyamide resin composition to, for example, 0.2 to 0.5% by mass, or 0.2 to 0.4% by mass.

Preferred examples of the fatty acid metal salt (C) include metal salts of a fatty acid having 10 to 28 carbon atoms. Examples thereof include zinc stearate, zinc laurate, zinc octoate, zinc behenate, zinc montanate, zinc melisinate, calcium laurate, barium laurate, lithium laurate, cobalt stearate, potassium stearate, lithium stearate, barium stearate, calcium stearate, magnesium stearate, aluminum stearate, sodium stearate, nickel stearate, lead stearate, copper(II) stearate, calcium behenate, zinc behenate, magnesium behenate, lithium behenate, sodium behenate, silver behenate, calcium montanate, magnesium montanate, aluminum montanate, lithium montanate, and sodium montanate, and in particular, at least one type selected from the group consisting of calcium stearate, magnesium stearate, and zinc stearate is more preferred.

<Copper-Based Stabilizer>

The polyamide resin composition of the present embodiment does not contain a copper-based stabilizer or has a sufficiently low copper-based stabilizer content in order to improve the residence stability during melting and the surface properties of the resulting extrusion-molded body. Specifically, as specified in the above-mentioned requirement [5], the polyamide resin composition does not contain a copper-based stabilizer, or a ratio of copper atoms derived from a copper-based stabilizer in the polyamide resin composition is 200 ppm by mass or less.

From the viewpoint of enhancing the residence stability and the surface properties of the extrusion-molded body, the ratio of copper atoms derived from a copper-based stabilizer in the polyamide resin composition is preferably 100 mass ppm or less, more preferably 50 mass ppm or less, even more preferably 20 mass ppm or less, and particularly preferably 0 mass ppm (that is, it does not contain copper atoms derived from a copper-based stabilizer).

The ratio of copper atoms can be determined by X-ray photoelectron spectroscopy (XPS) or the like. For example, it is possible to identify that the copper component is derived from a copper-based stabilizer by determining the ratio of the content of halogens, which can be measured by XPS or the like in the same manner as copper atoms, and the content of copper atoms.

As the method for determining the ratio of copper atoms, for example, it is possible to use a method for measuring the ratio of copper atoms in the polyamide resin composition using an X-ray photoelectron spectrometer (PHI Quantera SXM, manufactured by ULVAC-PHI INCORPORATED.) and using Al as the anticathode.

The copper-based stabilizer is a mixture of a copper compound and a metal halide.

Examples of the copper compound contained in the copper-based stabilizer include a copper halide, copper acetate, copper propionate, copper benzoate, copper adipate, copper terephthalate, copper isophthalate, copper salicylate, copper nicotinate, copper stearate, and a copper complex salt coordinated with a chelating agent such as ethylenediamine or ethylenediaminetetraacetic acid.

Examples of the copper halide include copper iodide; copper bromide such as copper(I) bromide and copper(II) bromide; and copper chloride such as copper(I) chloride.

The metal halide contained in the copper-based stabilizer is a metal halide that does not fall under a copper compound, and examples thereof include potassium iodide, potassium bromide, potassium chloride, sodium iodide, and sodium chloride.

As the copper-based stabilizer, among the copper compounds and metal halides, in particular, a mixture of at least one type of copper compound selected from the group consisting of copper iodide, copper bromide, and copper acetate, and at least one type of metal halide selected from the group consisting of potassium iodide and potassium bromide is often used.

<Other Additives>

The polyamide resin composition of the present embodiment may contain other additives different from the copper-based stabilizer as needed in addition to the semi-aromatic polyamide (A), the polyolefin (B), and the fatty acid metal salt (C).

Examples of the other additives include a colorant; an ultraviolet absorber; a light stabilizer; an antistatic agent; a flame retardant such as a brominated polymer, antimony oxide, a metal hydroxide, or a phosphinate; a flame retardant aid; a crystal nucleating agent; a plasticizer; a lubricant; a glidant; a dispersant; an oxygen absorber; a hydrogen sulfide adsorbent; an antioxidant; a release agent; an inorganic or organic fibrous filler such as a glass fiber, a carbon fiber, or a wholly aromatic polyamide fiber; a powdered filler such as wollastonite, silica, silica alumina, alumina, titanium dioxide, potassium titanate, magnesium hydroxide, molybdenum disulfide, a carbon nanotube, graphene, or polytetrafluoroethylene; and a flaky filler such as hydrotalcite, a glass flake, mica, clay, montmorillonite, or kaolin. Only one type of these may be contained or two or more types of these may be contained.

The content of the above-mentioned other additives is not particularly limited as long as the effects of the present invention are not impaired, but is preferably 0.02 to 24% by mass, more preferably 0.05 to 20% by mass, still more preferably 0.07 to 15% by mass, even more preferably 0.07 to 10% by mass, and particularly preferably 0.07 to 5% by mass with respect to 100% by mass of the semi-aromatic polyamide (A).

The polyamide resin composition of the present embodiment preferably contains an antioxidant as an additive. As the antioxidant, it is preferred to use, for example, at least one type selected from the group consisting of a phenol-based heat stabilizer, an amine-based heat stabilizer, a phosphorus-based heat stabilizer, and a sulfur-based heat stabilizer. The incorporation of an antioxidant in the polyamide resin composition makes it easier to improve the long-term heat resistance, and the use of at least one type selected from the above-mentioned group can further improve the long-term heat resistance.

The content of the antioxidant in the polyamide resin composition is preferably 0.1 to 2.0% by mass, and more preferably 0.5 to 1.0% by mass.

<Polyamide Resin Compositions X1 to X4>

Preferred embodiments of the polyamide resin composition of the present invention include the following polyamide resin compositions X1 to X4.

A polyamide resin composition X1, which contains a semi-aromatic polyamide (A), a polyolefin (B), and a fatty acid metal salt (C) and satisfies the following requirements [1a] and [2a], and the above-mentioned requirements [3] to [5].

[1a] A ratio of the mass MA of the semi-aromatic polyamide (A) to the mass MB of the polyolefin (B) in the polyamide resin composition is as follows: MA/MB = 63/37 to 84/16.
[2a] A content of the fatty acid metal salt (C) in the polyamide resin composition is 0.07 to 0.5% by mass with respect to the total mass of the semi-aromatic polyamide (A) and the polyolefin (B).

A polyamide resin composition X2, which contains a semi-aromatic polyamide (A), a polyolefin (B), and a fatty acid metal salt (C) and satisfies the following requirements [1b] and [2b], and the above-mentioned requirements [3] to [5].

[1b] A ratio of the mass MA of the semi-aromatic polyamide (A) to the mass MB of the polyolefin (B) in the polyamide resin composition is as follows: MA/MB = 68/32 to 82/18.
[2b] A content of the fatty acid metal salt (C) in the polyamide resin composition is 0.08 to 0.5% by mass with respect to the total mass of the semi-aromatic polyamide (A) and the polyolefin (B).

A polyamide resin composition X3, which contains a semi-aromatic polyamide (A), a polyolefin (B), and a fatty acid metal salt (C) and satisfies the following requirements [1c] and [2c], and the above-mentioned requirements [3] to [5].

[1c] A ratio of the mass MA of the semi-aromatic polyamide (A) to the mass MB of the polyolefin (B) in the polyamide resin composition is as follows: MA/MB = 73/27 to 85/15.
[2c] A content of the fatty acid metal salt (C) in the polyamide resin composition is 0.2 to 0.5% by mass with respect to the total mass of the semi-aromatic polyamide (A) and the polyolefin (B).

A polyamide resin composition X4, which contains a semi-aromatic polyamide (A), a polyolefin (B), and a fatty acid metal salt (C) and satisfies the following requirement [1d], the above-mentioned requirement [2c], and the above-mentioned requirements [3] to [5].
[1d] A ratio of the mass MA of the semi-aromatic polyamide (A) to the mass MB of the polyolefin (B) in the polyamide resin composition is as follows: MA/MB = 60/40 to 78/22.

[Method for Producing Polyamide Resin Composition]

The polyamide resin composition of the present embodiment can be produced, for example, by top-feeding the semi-aromatic polyamide (A), the polyolefin (B), and the aliphatic metal salt (C) into a twin-screw extruder, followed by melt-kneading.

The melt-kneading method is not particularly limited, and a method capable of uniformly mixing the semi-aromatic polyamide (A), the polyolefin (B), and the aliphatic metal salt (C), and other additives to be used as necessary can be preferably adopted. As the melt kneading machine, a single-screw extruder, a twin-screw extruder, a kneader, a Banbury mixer, or the like is preferred, and a twin-screw extruder is more preferred from the viewpoint of good dispersibility of the polyolefin (B) and industrial productivity.

[Extrusion-Molded Body and Method for Producing the Same]

The extrusion-molded body according to the embodiment of the present invention is an extrusion-molded body of the above-mentioned polyamide resin composition.

A method for producing the extrusion-molded body according to the embodiment of the present invention preferably includes a step of obtaining an extrusion-molded body by heating and melting the polyamide resin composition, and extrusion molding the melted polyamide resin composition.

In the extrusion molding, the pressure applied to the material is lower and the flow rate is slower than in injection molding, and therefore the material tends to be retained in a molten state and is likely to deteriorate due to heat. In particular, in the case of molding a large pipe, the diameter of a die becomes large, and therefore the residence time of the material may extend to several tens of minutes. Thus, in the extrusion molding, a material with excellent residence stability is required. The polyamide resin composition according to the present embodiment has excellent residence stability, and therefore is less likely to deteriorate due to heat, and an extrusion-molded body with excellent quality can be obtained.

(Temperature During Extrusion Molding and Residence Time)

In general, the melting point of a semi-aromatic polyamide is high, and therefore the extrusion molding temperature tends to be high. The temperature during extrusion molding is preferably in the range of 10 to 60°C higher than the melting point, and when the residence time exceeds 5 minutes, it is preferably in the range of 10 to 40°C higher than the melting point.

In particular, when the residence time exceeds 5 minutes, the molded body deteriorates significantly, and therefore the polyamide resin composition according to the present embodiment can be suitably used. Further, when the residence time exceeds 10 minutes, extremely high residence stability is required, and the polyamide resin composition according to the present embodiment can be suitably used even under such molding conditions.

In other words, the method for molding a polyamide resin composition according to one embodiment is a method for molding a polyamide resin composition, in which molding is performed by an extrusion molding machine using the above-mentioned polyamide resin composition that satisfies the requirements [1] to [5] under the conditions that the temperature of the polyamide resin composition during extrusion molding is 10 to 40°C higher than the melting point of the polyamide resin composition, or the conditions that the residence time in the extrusion molding machine is more than 5 minutes, and the temperature of the polyamide resin composition during extrusion molding is 10 to 40°C higher than the melting point of the polyamide resin composition, or the conditions that the residence time in the extrusion molding machine is more than 10 minutes, and the temperature of the polyamide resin composition during extrusion molding is 10 to 40°C higher than the melting point of the polyamide resin composition.

(Resin Pressure During Extrusion Molding)

The pressure applied to the material during extrusion molding (resin pressure during extrusion molding) is preferably as low as possible. If the pressure during extrusion molding is high, it is necessary to reduce the rotation speed of the screw from the viewpoint of reduction of the load on the extruder and safety. For this reason, not only does the production speed decrease, but the material is retained in the molding machine for a longer time, and is more likely to deteriorate due to heat. Although it is possible to reduce the pressure during extrusion molding by increasing the molding temperature, in this case, a problem arises that the heat accelerates the deterioration of the material.

The polyamide resin composition according to the present embodiment can prevent an increase in resin pressure during extrusion molding by satisfying the above-mentioned requirements [1] to [5], particularly by satisfying the requirement [2]. Therefore, the productivity is high, and the quality of the molded body can be enhanced by avoiding deterioration of the material due to heat.

(Applications of Extrusion-Molded Body)

Examples of the extrusion-molded body include molded bodies in the form of a film, a sheet, a tube, a monofilament, a multifilament, a pipe, a round bar, and a coating of a wire or the like, and the molded body can be used for an arbitrary part such as an automobile part, an engineering material, an industrial material, an electrical or electronic part, a mechanical part, a part for an office supply, or household goods. In particular, it has excellent chemical resistance, heat resistance, flexibility, and impact resistance, and therefore can be suitably used as a chemical pipe, a composite pipe, a rodless oil recovery pipe, an onshore oil transport pipe, an offshore oil transport pipe, a geothermal fluid pipe, an umbilical tube, or a flexible pipe.

The polyamide resin composition of the present embodiment can be used to produce a single layer structure, and can also be used to produce at least one layer of a multilayer structure. For example, in a tube having a single layer structure or a multilayer structure, the polyamide resin composition of the present embodiment can be suitably used for at least one of the constituent layers.

Examples

Hereinafter, the present invention will be described in more detail with reference to Examples, but the present invention is by no means limited to these Examples.

Measurement of physical properties of materials used in Examples and Comparative Examples, measurement of physical properties of compositions and films in Examples and Comparative Examples, and evaluations were performed according to the methods shown below.

(Measurement of Physical Properties of Semi-Aromatic Polyamide)

· Inherent viscosity

With respect to the semi-aromatic polyamide (sample) obtained in each Production Example, the inherent viscosity (dL/g) at a temperature of 30°C using concentrated sulfuric acid as a solvent at a concentration of 0.2 g/dL was determined using the following formula (S).

$$\eta_{inh} = [\ln(t_1/t_0)]/c \qquad \text{Formula (S)}$$

In the formula (S), $\eta_{inh}$ represents the inherent viscosity (dL/g), $t_0$ represents the flow-down time (sec) of the solvent (concentrated sulfuric acid), $t_1$ represents the flow-down time (sec) of the sample solution, and c represents the concentration (g/dL) of the sample in the sample solution (that is, 0.2 g/dL).

· Melting point

The melting point of the semi-aromatic polyamide obtained in each Production Example was measured in accordance with ISO 11357-3 (2nd edition, 2011) using a differential scanning calorimetry analyzer "DSC 7020" manufactured by Hitachi High-Tech Science Corporation.

Specifically, first, in a nitrogen atmosphere, a sample (polyamide) was heated from 30°C to 300°C at a rate of 10°C/min, held at 300°C for 5 minutes to completely melt the sample, then cooled to 50°C at a rate of 10°C/min, and held at 50°C for 5 minutes. The peak temperature of the melting peak that appeared when the temperature was raised again to 300°C at a rate of 10°C/min was defined as the melting point (°C), and when there were multiple melting peaks, the peak temperature of the melting peak on the highest temperature side was defined as the melting point (°C).

· Terminal amino group content

The semi-aromatic polyamide (1 g) obtained in each Production Example was dissolved in 35 mL of phenol, and 2 mL of methanol was mixed therein to prepare a sample solution. Titration was performed using thymol blue as an indicator and a 0.01 N aqueous hydrochloric acid solution to measure the terminal amino group content ([NH$_2$], unit: $\mu$eq/g) of the semi-aromatic polyamide.

· Terminal carboxy group content

The semi-aromatic polyamide (0.5 g) obtained in each Production Example was dissolved in 40 mL of orthocresol to prepare a sample solution. The obtained sample solution was titrated using a 0.01 N ethanolic potassium hydroxide solution using a potentiometric titrator manufactured by KYOTO ELECTRONICS MANUFACTURING CO., LTD., and the inflection point of the potential was detected, thereby measuring the terminal carboxy group content ([COOH], unit: $\mu$eq/g) of the semi-aromatic polyamide.

(Evaluation of Polyamide Resin Composition and Extrusion-Molded Body thereof)

· Production stability of polyamide resin composition

In Examples and Comparative Examples, the processing stability when the polyamide resin composition was produced using a twin-screw extruder was evaluated according to the following two-stage criteria.

· A: There is no vent-up or strand breakage at the vacuum vent port, and stable production is possible.
· B: The stability of the strand is reduced, and a volatilized material tends to be deposited in the vacuum vent, and there is a concern about the production stability.

· Appearance of extrusion-molded body during retention at high temperature

The appearance of a molded body resulting from ejection of each of the polyamide resin compositions obtained in Examples and Comparative Examples after discharging for 30 minutes under the conditions of a cylinder temperature of 300°C, a die temperature of 300°C, and a screw rotation speed of 5 rpm/30 rpm using a tube molding apparatus in which a straight die (die inner diameter: φ21.0 mm, mandrel outer diameter: φ14.9 mm) was connected to a single-screw extruder (screw diameter: φ50 mm, L/D = 28) manufactured by IKG Corporation was visually checked and evaluated according to the following criteria. The residence time inside the molding machine when the screw rotation speed was 5 rpm and 30 rpm was 15 minutes and 2.5 minutes, respectively.

· A: The surface of the molded body is smooth and glossy.
· B: The surface of the molded body is rough.

· Resin pressure during extrusion molding

Each of the polyamide resin compositions obtained in Examples and Comparative Examples was ejected using the above-mentioned tube molding apparatus under the conditions of a cylinder temperature of 280°C, a die temperature of 280°C, and a screw rotation speed of 30 rpm, and the resin pressure was measured using a pressure gauge connected to the tip of the cylinder of the single-screw extruder.

· Surface smoothness of extrusion-molded body (tube)

Each of the polyamide resin compositions obtained in Examples and Comparative Examples was ejected using the above-mentioned tube molding apparatus under the conditions of a cylinder temperature of 280°C, a die temperature of 280°C, and a screw rotation speed of 30 rpm. Subsequently, the polyamide resin composition was subjected to dimensional control and cooling in a vacuum sizing tank, and the center line average roughness (Ra) in the flow direction of the outer surface of a tube with an outer diameter of 8.0 mm and an inner diameter of 6.0 mm obtained by molding at a take-up speed of 10 m/min was measured using a contacttype surface roughness meter (SP-85DS2) manufactured by Kosaka Laboratory Ltd.

· Tensile properties of extrusion-molded body (tube)

A tensile elongation at break (%) at 23°C was measured with an Autograph (manufactured by Instron) in accordance with SAE J2260 using the produced tube. The larger the value of the tensile elongation at break is, the more excellent the elongation properties are. The measurement conditions were as follows.

Tensile speed: 50 mm/min
Test length (between grips): 150 mm
Grip length: 50 mm at each end

· Production of dumbbell test piece

An injection molding machine manufactured by Sumitomo Heavy Industries, Ltd. (clamping force: 100 tons, screw diameter: φ32 mm) was used, and a multi-purpose test piece of type A1 (dumbbell-shaped test piece described in JIS K 7139: 2009; 4 mm thick, total length: 170 mm, parallel part length: 80 mm, parallel part width: 10 mm) was produced using each of the polyamide resin compositions obtained in Examples and Comparative Examples by molding the polyamide resin composition with a T-runner mold under the condition of a mold temperature of 140°C by setting the cylinder temperature to a temperature 20 to 30°C higher than the melting point of the semi-aromatic polyamide. Then, a rectangular parallelepiped test piece (dimensions: length × width × thickness = 80 mm × 10 mm × 4 mm) was cut out from the multi-purpose test piece, and was used as a test piece for evaluation in a tensile test and an impact resistance test.

· Tensile test

A tensile strength (maximum point) (MPa) at 23°C and a tensile speed of 50 mm/min was measured with an Autograph (manufactured by Instron) in accordance with ISO 527-1 (2nd edition, 2012) using a multi-purpose test piece of type A1 (4 mm thick) produced by the above-mentioned method.

· Flexural modulus

A flexural modulus (GPa) at 23°C was measured with an Autograph (manufactured by Instron) in accordance with ISO 178 using a multi-purpose test piece of type A1 (4 mm thick) produced by the above-mentioned method. The measurement was performed at a bending speed of 2 mm/min.
From the viewpoint of flexibility of the extrusion-molded body, the flexural modulus is preferably 1.7 GPa or less.

· Impact resistance

A test piece (4 mm thick, total length: 80 mm, width: 10 mm, with a notch) was produced by cutting from a multi-purpose test piece of type A1 (4 mm thick) produced by the above-mentioned method, notched Charpy impact values at 23°C and -40°C were measured using an impact tester (manufactured by Toyo Seiki Seisakusho, Ltd.) in accordance with ISO 179-1 (2nd edition, 2010), and the impact resistance ($kJ/m^2$) was evaluated.

· Chemical resistance

A test piece for a tensile test produced by the above-mentioned method was immersed in an automobile engine coolant (Toyota Genuine Super Long Life Coolant/water = 50/50 volume ratio) in a pressure container and left to stand for 1,000 hours in a thermostat bath ("DE-303" manufactured by Mita Sangyo Co., Ltd.) set to 130°C. The test piece taken out after 1,000 hours was subjected to a tensile test at 23°C in the same manner as described above, and the tensile strength after immersion in the chemical was measured.
The tensile strength retention rate was determined using the following formula (T), and the chemical resistance was evaluated.

$$\text{Tensile strength retention rate (\%)}$$
$$= (\text{Tensile strength after 1,000 hours/Initial tensile strength}) \times 100 \qquad \text{Formula (T)}$$

[Production Examples]

Production Example 1 [Production of semi-aromatic polyamide (A): PA-1]

In an autoclave having an internal volume of 40 L, 9871.2 g (59.42 mol) of terephthalic acid, 9639.3 g (60.90 mol) of a mixture [50/50 (molar ratio)] of 1,9-nonanediamine and 2-methyl-1,8-octanediamine, 142.9 g (1.17 mol) of benzoic acid, 9.8 g of sodium hypophosphite monohydrate (0.05% by mass with respect to the total mass of raw materials) and 5 L of distilled water were placed, and nitrogen replacement was performed. The temperature inside the autoclave was raised to 220°C over 2 hours with stirring. At this time, the pressure inside the autoclave was increased to 2 MPa. The temperature was raised to 230°C after the reaction was continued for 2 hours, and then the temperature was maintained at 230°C for 2 hours, and a reaction was allowed to proceed while the pressure was maintained at 2 MPa by gradually removing water vapor. Subsequently, the pressure was decreased to 1 MPa over 30 minutes, and the reaction was further allowed to proceed for 1 hour to obtain a prepolymer having an inherent viscosity $\eta_{inh}$ of 0.2 dL/g.
The prepolymer was crushed to a particle diameter of 2 mm or less with a flake crusher manufactured by Hosokawa Micron Corporation, and dried at 100°C under reduced pressure for 12 hours, and then subjected to solid phase polymerization at 230°C and 13 Pa (0.1 mmHg) for 10 hours to obtain a white semi-aromatic polyamide (A) (semi-aromatic polyamide PA-1). The semi-aromatic polyamide PA-1, which is the semi-aromatic polyamide A, contained a terephthalic acid unit, a 1,9-nonanediamine unit, and a 2-methyl-1,8-octanediamine unit (1,9-nonanediamine unit/2-methyl-1,8-octanediamine unit = 50/50 (molar ratio)), and had a melting point of 265°C, an inherent viscosity $\eta_{inh}$ of 1.28 dL/g, a terminal amino group content ([$NH_2$]) of 51.5 μeq/g, and a terminal carboxy group content ([COOH]) of 23.4 μeq/g. That is, the value of [$NH_2$]/[COOH] of the semi-aromatic polyamide PA-1 is 2.2, which satisfies the above-mentioned requirement [3].

Production Example 2 [Production of semi-aromatic polyamide: PA-2]

In an autoclave having an internal volume of 40 L, 9871.2 g (59.42 mol) of terephthalic acid, 9544.3 g (60.30 mol) of a mixture [50/50 (molar ratio)] of 1,9-nonanediamine and 2-methyl-1,8-octanediamine, 142.9 g (1.17 mol) of benzoic acid, 9.8 g of sodium hypophosphite monohydrate (0.05% by mass with respect to the total mass of raw materials) and 5 L of distilled water were placed, and nitrogen replacement was performed. Thereafter, polymerization was allowed to proceed in the same manner as in Production Example 1 to obtain a semi-aromatic polyamide PA-2 other than the semi-aromatic polyamide (A). The semi-aromatic polyamide PA-2 had a melting point of 265°C, an inherent viscosity $\eta_{inh}$ of 1.26 dL/g, a terminal amino group content ([NH$_2$]) of 15.6 $\mu$eq/g, and a terminal carboxy group content ([COOH]) of 55.1 $\mu$eq/g. That is, the value of [NH$_2$]/[COOH] of the semi-aromatic polyamide PA-2 is 0.28 which does not satisfy the above-mentioned requirement [3].

[Examples and Comparative Examples]

Polyamide resin compositions of Examples and Comparative Examples were prepared according to the formulations shown in Tables 1 and 2.

Specifically, a semi-aromatic polyamide, a fatty acid metal salt (C), a copper stabilizer, an antioxidant, a glidant, a release agent, and a colorant shown in Table 1 or 2 were mixed in advance at a mass ratio shown in Table 1 or 2, and fed into an upstream feed port of a twin-screw extruder ("TEM-26SS" manufactured by Toshiba Machine Co., Ltd.) together with a polyolefin of a type at a mass ratio shown in Table 1 or 2. The mixture was kneaded by melt-kneading under the conditions of a cylinder temperature of 300 to 320°C (melt-kneading temperature: 310 to 340°C, the melt-kneading temperature indicates a resin temperature), a rotation speed of 150 rpm, and an ejection rate of 10 kg/hr, and then extruded, cooled, and cut to produce a polyamide resin composition in a pellet form. A test piece for evaluating various physical properties was produced using the above-mentioned pellets, and various evaluations were performed using the methods described above. The results are shown in Tables 1 and 2.

The details of the components shown in Tables 1 and 2 are as follows.

<Semi-aromatic polyamide (A): PA-1>

· Semi-aromatic polyamide PA-1 obtained in Production Example 1

<Semi-aromatic polyamide: PA-2 other than semi-aromatic polyamide (A)>

· Semi-aromatic polyamide PA-2 obtained in Production Example 2

<Polyolefin (B)>

· TAFMER MH7010, manufactured by Mitsui Chemicals, Inc.: a maleic anhydride modified ethylene-butene copolymer [acid anhydride group content: 50 $\mu$mol/g]
· TAFMER MH5010, manufactured by Mitsui Chemicals, Inc.: a maleic anhydride modified ethylene-butene copolymer [acid anhydride group content: 50 $\mu$mol/g]
· TAFMER MP0620, manufactured by Mitsui Chemicals, Inc.: a maleic anhydride modified ethylene-propylene copolymer [acid anhydride group content: 100 $\mu$mol/g]
· Lotader 4700, manufactured by Arkema S.A.: a copolymer of ethylene, ethyl acrylate, and maleic anhydride [Et/EA/MAH = 68.7/30/1.3 (mass ratio)]

<Polyolefin other than polyolefin (B)>

· Lotader AX8900, manufactured by Arkema S.A.: a copolymer of ethylene, methyl acrylate, and glycidyl methacrylate [Et/MA/GMA = 68/24/8 (mass ratio)]

<Aliphatic metal salt (C)>

· Calcium Stearate S (CaSt), manufactured by NOF CORPORATION

<Copper stabilizer>

· KG HS-01P, manufactured by PolyAd Services Inc. (ratio of copper atoms in KG HS-01P: 3.4% by mass)

<Antioxidant>

· SUMILIZER GA-80 (phenolic heat stabilizer), manufactured by Sumitomo Chemical Co., Ltd.: 3,9-bis{2-[3-(3-tert-butyl-4-hydroxy-5-methylphenyl)propionyloxy]-1,1-dimethyl ethyl }-2,4,8, 10-tetraoxaspiro[5.5]undecane
· Naugard 445 (amine-based heat stabilizer), manufactured by Addivant: 4,4'-bis($\alpha,\alpha$-dimethylbenzyl)diphenylamine

<Glidant>

· Amide wax Light Amide WH-255, manufactured by KYOEISHA CHEMICAL Co., LTD.

<Release agent>

· Licowax OP, manufactured by Clariant Japan K.K.

<Colorant>

· Carbon black #980B, manufactured by Mitsubishi Chemical Corporation

Table 1

| Type | | Name or the like | Example 1 | Example 2 | Example 3 | Example 4 | Example 5 | Example 6 | Comparative Example 1 | Comparative Example 2 |
|---|---|---|---|---|---|---|---|---|---|---|
| Component (parts by mass) | Semi-aromatic polyamide (A) | PA-1 | 78.4 | 73.5 | 68.6 | 78.6 | 78.3 | 78.4 | - | - |
| | other than (A) | PA-2 | - | - | - | - | - | - | 83.6 | 79.0 |
| | Polyolefin (B) | TAFMER MH7010 | 19.6 | 24.5 | 29.4 | 19.6 | 19.6 | 19.6 | - | - |
| | | TAFMER MH5010 | - | - | - | - | - | - | 14.7 | - |
| | | TAFMER MP0620 | - | - | - | - | - | - | - | 19.8 |
| | | Lotader 4700 | - | - | - | - | - | - | - | - |
| | other than (B) | Lotader AX8900 | - | - | - | - | - | - | - | - |
| | Fatty acid metal salt (C) | CaSt | 0.3 | 0.3 | 0.3 | 0.1 | 0.5 | 0.3 | - | - |
| | Copper-based stabilizer | KG HS-01P | - | - | - | - | - | 0.03 | - | 0.8 |
| | Antioxidant | GA-80 | 0.9 | 0.9 | 0.9 | 0.9 | 0.9 | 0.9 | 0.9 | - |
| | | Naugard445 | - | - | - | - | - | - | - | - |
| | Glidant | WH255 | 0.6 | 0.6 | 0.6 | 0.6 | 0.6 | 0.6 | 0.6 | - |
| | Release agent | Licowax OP | - | - | - | - | - | - | - | 0.2 |
| | Colorant | #980B | 0.2 | 0.2 | 0.2 | 0.2 | 0.2 | 0.2 | 0.2 | 0.2 |
| Measurement and evaluation | Production stability of polyamide resin composition | | A | A | A | A | A | A | A | A |
| | Appearance of molded body during retention at high temperature (residence time: 2.5 min) | | A | A | A | A | A | A | A | A |
| | Appearance of molded body during retention at high temperature (residence time: 15 min) | | A | A | A | A | A | A | A | B |
| | Resin pressure during extrusion molding (MPa) | | 4.4 | 6.4 | 7.9 | 7.0 | 4.9 | 5.8 | 6.0 | 6.4 |
| | Surface smoothness of molded body (tube) (μm) | | 0.27 | 0.45 | 0.61 | 0.30 | 0.25 | 0.40 | 0.36 | 0.15 |
| | Flexural modulus (GPa) | | 1.40 | 1.30 | 1.20 | 1.40 | 1.40 | 1.40 | 1.70 | 1.40 |
| | Charpy impact value (-40°C) (kJ/m²) | | 31 | 59 | 86 | 25 | 20 | 23 | 20 | 25 |
| | Tensile strength retention rate after immersion in chemical (%) | | 84 | 87 | 83 | 85 | 87 | 85 | 29 | 46 |
| | Tensile elongation of molded body (tube) (%) | | 281 | 285 | 288 | 278 | 275 | 270 | 257 | 254 |

Table 2

| Type | | Name or the like | Comparative Example 3 | Comparative Example 4 | Comparative Example 5 | Comparative Example 6 | Comparative Example 7 | Comparative Example 8 |
|---|---|---|---|---|---|---|---|---|
| Component (parts by mass) | Semi-aromatic polyamide (A) | PA-1 | 78.0 | 68.3 | 78.7 | 73.4 | 73.2 | 77.9 |
| | other than (A) | PA-2 | - | - | - | - | - | - |
| | Polyolefin (B) | TAFMER MH7010 | 19.5 | 29.3 | 19.7 | - | - | 19.5 |
| | | TAFMER MH5010 | - | - | - | - | - | - |
| | | TAFMER MP0620 | - | - | - | - | - | - |
| | | Lotader 4700 | - | - | - | 17.6 | 17.6 | - |
| | other than (B) | Lotader AX8900 | - | - | - | 6.8 | 6.8 | - |
| | Fatty acid metal salt (C) | CaSt | 0.3 | 0.3 | - | - | 0.3 | 1.0 |
| | Copper-based stabilizer | KG HS-01P | 0.8 | 0.8 | - | 0.8 | 0.8 | - |
| | Antioxidant | GA-80 | - | - | 0.9 | - | - | 0.9 |
| | | Naugard445 | 0.6 | 0.6 | - | 0.6 | 0.6 | - |
| | Glidant | WH255 | 0.6 | 0.6 | 0.6 | 0.6 | 0.6 | 0.6 |
| | Release agent | Licowax OP | - | - | - | - | - | - |
| | Colorant | #980B | 0.2 | 0.2 | 0.2 | 0.2 | 0.2 | 0.2 |
| Measurement and evaluation | Production stability of polyamide resin composition | | A | A | A | A | A | B |
| | Appearance of molded body during retention at high temperature (residence time 2.5 min) | | A | A | A | A | A | A |
| | Appearance of molded body during retention at high temperature (residence time 15 min) | | B | B | A | B | B | A |
| | Resin pressure during extrusion molding (MPa) | | 5.5 | 8.0 | 9.1 | 9.0 | 9.6 | 2.5 |
| | Surface smoothness of molded body (tube) (μm) | | 0.26 | 0.50 | 0.36 | 0.42 | 0.35 | 0.21 |
| | Flexural modulus (GPa) | | 1.40 | 1.20 | 1.40 | 1.32 | 1.36 | 1.40 |
| | Charpy impact value (-40°C) (kJ/m²) | | 28 | 42 | 77 | 25 | 25 | 13 |
| | Tensile strength retention rate after immersion in chemical (%) | | 82 | 80 | 88 | 77 | 75 | 85 |
| | Tensile elongation of molded body (tube) (%) | | 260 | 260 | 273 | 255 | 264 | 236 |

From the results in Table 1, it can be seen that the polyamide resin compositions of Examples 1 to 6 that satisfy all of the above-mentioned requirements [1] to [5] have good production stability and excellent residence stability.

Further, from Tables 1 and 2, it can be seen that the increase in pressure during extrusion molding is prevented, the obtained tube has excellent surface properties, and has excellent flexibility, chemical resistance, and impact resistance in a wide temperature range. In addition, the tube, which is the extrusion-molded body of the polyamide resin composition that satisfies the above-mentioned requirements [1] to [5], has excellent surface properties, excellent flexibility, chemical resistance, and impact resistance in a wide temperature range, and further has high elongation properties.

On the other hand, from Tables 1 and 2, it can be seen that the polyamide resin composition of Comparative Example 5, which does not contain the fatty acid metal salt (C) and does not satisfy the requirement [2], has good production stability and residence stability, but the resin pressure during extrusion molding is significantly increased as compared with the polyamide resin compositions of Examples 1 to 6.

Further, from Tables 1 and 2, it can be seen that the polyamide resin composition of Comparative Example 8, which has a high fatty acid metal salt (C) content and does not satisfy the requirement [2], has good residence stability, but the production stability is deteriorated, and the elongation properties and impact resistance in a low temperature range of the extrusion-molded body are also deteriorated.

Further, from Tables 1 and 2, it can be seen that in the polyamide resin composition of Comparative Example 3, which has a high copper-based stabilizer content and does not satisfy the requirement [5], the residence stability is deteriorated, and the resin pressure during extrusion molding is increased and the elongation properties of the extrusion-molded body are also deteriorated as compared with the polyamide resin composition of Example 1 in which the mass ratio of the components (A) and (B) is equivalent.

Further, from Tables 1 and 2, it can be seen that in the polyamide resin composition of Comparative Example 4, which has a high copper-based stabilizer content and does not satisfy the requirement [5], the residence stability is deteriorated, and the elongation properties and the impact resistance in a low temperature range of the extrusion-molded body are significantly deteriorated as compared with the polyamide resin composition of Example 3 in which the mass ratio of the components (A) and (B) is equivalent.

Further, from Tables 1 and 2, it can be seen that in the polyamide resin compositions of Comparative Examples 6 and 7 obtained using a polyolefin which does not satisfy the above-mentioned requirement [4], the residence stability is deteriorated, and the resin pressure during extrusion molding is significantly increased, and the elongation properties of the extrusion-molded body are also deteriorated.

Further, from Table 1, it can be seen that in the polyamide resin composition of Comparative Example 2 obtained using the semi-aromatic polyamide PA-2 which does not satisfy the above-mentioned requirement [3], the residence stability is deteriorated, and the resin pressure during extrusion molding is increased and the chemical resistance, the elongation properties, and the impact resistance in a low temperature range of the extrusion-molded body thereof are deteriorated as compared with the polyamide resin composition of Example 1 in which the mass ratio of the components (A) and (B) is equivalent.

Further, from Table 1, it can be seen that in the polyamide resin composition of Comparative Example 1 obtained using the semi-aromatic polyamide PA-2 which does not satisfy the above-mentioned requirement [3], even if the mass ratio of the component (A) to the component (B) is further increased than in Example 1, the chemical resistance, the elongation properties, and the impact resistance in a low temperature range of the extrusion-molded body thereof are deteriorated, and the resin pressure during extrusion molding is increased as compared with the polyamide resin composition of Example 1.

Further, from Table 2, as is clear from the comparison between Comparative Example 6 and Comparative Example 7, and the comparison between Comparative Examples 3 and 5 and Comparative Example 7, it can be understood that in the case of a polyamide resin composition obtained using a polyolefin having a functional group containing an unsaturated epoxide, even if the fatty acid metal salt (C) is added, the effect of reducing the resin pressure during extrusion molding cannot be obtained. That is, it can be seen that if the above-mentioned requirement [4] is not satisfied, the effect of reducing the resin pressure during extrusion molding cannot be obtained.

**Claims**

1. A polyamide resin composition, which comprises a semi-aromatic polyamide (A), a polyolefin (B), and a fatty acid metal salt (C), and satisfies requirements [1] to [5] below:

    [1] a ratio of a mass MA of the semi-aromatic polyamide (A) and a mass MB of the polyolefin (B) in the polyamide resin composition is as follows: MA/MB = 60/40 to 85/15;
    [2] a content of the fatty acid metal salt (C) in the polyamide resin composition is 0.05 to 0.5% by mass with respect to the total mass of the semi-aromatic polyamide (A) and the polyolefin (B);
    [3] a terminal amino group concentration $[NH_2]$ ($\mu$eq/g) of the semi-aromatic polyamide (A) is 45 to 80 $\mu$eq/g, and a ratio of the terminal amino group concentration and a terminal carboxy group concentration [COOH] ($\mu$eq/g) of the semi-aromatic polyamide (A) satisfies formula (1) below:

    $$2 < [NH_2]/[COOH] < 5 \qquad \text{Formula (1);}$$

[4] the polyolefin (B) does not contain a functional group comprising an unsaturated epoxide, or a content ratio of a functional group comprising an unsaturated epoxide in the polyolefin (B) is 200 μmol/g or less; and
[5] the polyamide resin composition does not contain a copper-based stabilizer, or a ratio of copper atoms derived from a copper-based stabilizer in the polyamide resin composition is 200 ppm by mass or less.

2.  The polyamide resin composition according to claim 1, wherein the semi-aromatic polyamide (A) contains 50 mol% or more of at least one type selected from a group consisting of a terephthalic acid unit and a naphthalene dicarboxylic acid unit with respect to all dicarboxylic acid units.

3.  The polyamide resin composition according to claim 1 or 2, wherein the semi-aromatic polyamide (A) contains 60 mol% or more of an aliphatic diamine unit having 7 to 13 carbon atoms or a metaxylylene diamine unit with respect to all diamine units.

4.  The polyamide resin composition according to claim 3, wherein the aliphatic diamine unit having 7 to 13 carbon atoms is a unit derived from at least one type of aliphatic diamine selected from a group consisting of 1,7-heptanediamine, 1,8-octanediamine, 1,9-nonanediamine, 2-methyl-1,8-octanediamine, and 1,10-decanediamine.

5.  The polyamide resin composition according to claim 3 or 4, wherein the aliphatic diamine unit having 7 to 13 carbon atoms is a unit derived from at least one type of aliphatic diamine selected from a group consisting of 1,9-nonanediamine and 2-methyl-1,8-octanediamine.

6.  The polyamide resin composition according to any one of claims 1 to 5, wherein the polyolefin (B) is a modified polyolefin obtained by modification with at least one type selected from a group consisting of an α,β-unsaturated carboxylic acid and a derivative thereof.

7.  The polyamide resin composition according to any one of claims 1 to 6, wherein the fatty acid metal salt (C) is a metal salt of a fatty acid having 10 to 28 carbon atoms.

8.  The polyamide resin composition according to any one of claims 1 to 7, wherein the fatty acid metal salt (C) is selected from a group consisting of calcium stearate, magnesium stearate, and zinc stearate.

9.  The polyamide resin composition according to any one of claims 1 to 8, which contains an antioxidant.

10. An extrusion-molded body of the polyamide resin composition according to any one of claims 1 to 9.

11. The extrusion-molded body according to claim 10, which is a chemical pipe, a composite pipe, a rodless oil recovery pipe, an onshore oil transport pipe, an offshore oil transport pipe, a geothermal fluid pipe, an umbilical tube, or a flexible pipe.

12. A method for producing an extrusion-molded body, in which an extrusion-molded body is obtained by heating and melting the polyamide resin composition according to any one of claims 1 to 9, and extrusion molding the melted polyamide resin composition.

## INTERNATIONAL SEARCH REPORT

| International application No. |
| --- |
| **PCT/JP2023/027822** |

| A. | CLASSIFICATION OF SUBJECT MATTER |
| --- | --- |

*C08L 77/06*(2006.01)i; *C08K 5/09*(2006.01)i; *C08L 23/00*(2006.01)i
FI:  C08L77/06; C08L23/00; C08K5/09

According to International Patent Classification (IPC) or to both national classification and IPC

| B. | FIELDS SEARCHED |
| --- | --- |

Minimum documentation searched (classification system followed by classification symbols)

C08L77/06; C08K5/09; C08L23/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2003-503534 A (BP CORPORATION NORTH AMERICA INC.) 28 January 2003 (2003-01-28)<br>entire text | 1-12 |
| A | JP 11-1555 A (AMOCO CORP.) 06 January 1999 (1999-01-06)<br>entire text | 1-12 |
| A | WO 2012/169334 A1 (MITSUBISHI GAS CHEMICAL CO., INC.) 13 December 2012 (2012-12-13)<br>entire text | 1-12 |
| A | JP 2007-224222 A (ASAHI KASEI CHEMICALS CORP.) 06 September 2007 (2007-09-06)<br>entire text | 1-12 |
| A | JP 2019-1915 A (ASAHI KASEI KABUSHIKI KAISHA) 10 January 2019 (2019-01-10)<br>entire text | 1-12 |
| A | JP 2016-138163 A (MITSUI CHEMICALS, INC.) 04 August 2016 (2016-08-04)<br>entire text | 1-12 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 October 2023** | **17 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027822**

| Patent document cited in search report | | | Publication date (day/month/year) | Patent family member(s) | | | Publication date (day/month/year) |
|---|---|---|---|---|---|---|---|
| JP | 2003-503534 | A | 28 January 2003 | US<br>entire text<br>WO | 6518341<br><br>2000/078869 | B1<br><br>A1 | |
| JP | 11-1555 | A | 06 January 1999 | US<br>entire text<br>US<br>EP | 5763561<br><br>5962628<br>827976 | A<br><br>A<br>A2 | |
| WO | 2012/169334 | A1 | 13 December 2012 | US<br>entire text<br>EP<br>CA<br>KR<br>CN<br>TW | 2013/0123439<br><br>2586813<br>2804131<br>10-2013-0018340<br>103080188<br>201302852 | A1<br><br>A1<br>A1<br>A<br>A<br>A | |
| JP | 2007-224222 | A | 06 September 2007 | (Family: none) | | | |
| JP | 2019-1915 | A | 10 January 2019 | (Family: none) | | | |
| JP | 2016-138163 | A | 04 August 2016 | (Family: none) | | | |

Form PCT/ISA/210 (patent family annex) (January 2015)

**REFERENCES CITED IN THE DESCRIPTION**

**Patent documents cited in the description**

- JP 2013040346 A
- JP 2016172445 A